# EUROPEAN PATENT APPLICATION

(11) **EP 3 599 696 A1**
(43) Date of publication of application: **29.01.2020**
(21) Application number: 19195753.9
(22) Date of filing: 13.06.2012
(51) Int. Cl.: H02J 7/00, H01M 10/44, H02J 3/00, H02J 7/35, H02J 3/32, H02J 3/14, H02J 13/00, B60L 53/50

(54) **CHARGING SYSTEM, CHARGING MANAGEMENT DEVICE, CONTROL METHOD, AND PROGRAM**

(30) Priority: 15.06.2011 JP 2011133157
(62) Divisional of application: 19165646.1
(71) Applicant: Mitsubishi Heavy Industries, Ltd., Tokyo 100-8332 (JP)
(72) Inventor: SHIBATA, Yutaka, Tokyo, 100-8332 (JP); HASEGAWA, Rie, Tokyo, 100-8332 (JP); ADACHI, Tetsuya, Tokyo, 100-8332 (JP); HATTORI, Kaito, Tokyo, 100-8332 (JP)
(74) Representative: Henkel & Partner mbB

(57) **Abstract**

A charging stand device is configured to control a charging device for charging a vehicle. The charging stand device is configured to be connected for communication with the charging device, a power distribution board, and an automatic fare adjustment machine. The charging stand device is configured to control the charging device through the power distribution board so that power to be provided to charge the vehicle is changed from grid power to off-grid power, or from off-grid power to grid power according to a relative magnitude of a proportion of a demand to an amount of grid power supplied in the region of a predetermined range. The charging stand device is configured to set a unit price of charging fee determined according to the relative magnitude of the proportion of the demand to the amount of grid power supplied in the region.

## Description

### [Technical Field]

The present invention relates to a charging system, a charging management device, a control method, and a program. In particular, the present invention relates to a charging system which provides grid power supplied from a public power grid and off-grid power supplied from a non-public power supply to charge a vehicle and a charging management device which manages one or more charging devices, each of which has a charging function of providing at least grid power among grid power and off-grid power to charge the vehicle. In addition, the present invention relates to a control method of controlling the charging management device and a program to be used in the charging management device.

Priority is claimed on Japanese Patent Application No. 2011-133157, filed June 15, 2011, the content of which is incorporated herein by reference.

### [Background Art]

Electric vehicles are expected to become widespread rapidly in the near future. Accordingly, like gas stations, charging stands to charge the electric vehicles are expected to spread throughout cities. As a result, an amount of power demanded is expected to be significantly increased compared to the present time at which electric vehicles or charging stands are not widespread. However, it is difficult to easily increase the amount of power supplied according to the amount of power demanded. Therefore, high power usage efficiency is desirable in the charging stands.

It is already known that technology related to the charging stand contributes to improvement of power supply efficiency (for example, see Patent Literature 1). The charging stand disclosed in Patent Literature 1 includes a plurality of chargers connected to an electric vehicle, a storage battery which accumulates power to be supplied to the charger, and a new energy use power generator and a commercial power supply reception section used to obtain power to be used to charge the storage battery and power to be supplied to the charger. Then, the charging stand receives cheap nighttime power using a commercial power supply reception section at night and charges the storage battery with the received power via the charging device. In addition, power generation by the new energy use power generator such as solar power generation is performed, and the battery of the electric vehicle is charged via the charger with power accumulated in the storage battery. In this manner, because the charging stand disclosed in Patent Literature 1 is configured to charge the storage battery with new energy and nighttime power from a commercial power supply and perform charging from the storage battery to the battery mounted on the electric vehicle, it is possible to contribute to load leveling of power.

### [Citation List]

### [Patent Literature]

### [Patent Literature 1]

Japanese Unexamined Patent Application, First Publication No. 2010-252587

### [Summary of Invention]

### [Technical Problem to be Solved by the Invention]

Incidentally, grid power supplied from a public power grid is not always insufficient. That is, it may also be possible to have a margin in an amount of grid power supplied if the amount of power demanded is low even in the daytime. However, from the viewpoint of the efficiency of power use, it may be ideal to prevent the amount of power demanded from being relatively low compared to the total amount of grid power.

However, although the technology disclosed in Patent Literature 1 can contribute to the load leveling of power using the cheap nighttime power when a commercial power supply is used, a proportion of the demand to the amount of grid power supplied is not considered. Therefore, if the proportion of the demand to the supply amount of grid power is changed even when the technology disclosed in Patent Literature 1 is implemented, it is difficult to efficiently provide power to charge according to the change.

### [Means for Solving the Problem]

In order to solve the aforementioned problem, according to a first aspect of the present invention, a charging system which provides grid power supplied from a public power grid and off-grid power supplied from a non-public power supply to charge a vehicle includes one or more charging devices, each of which has a charging function of providing at least grid power among grid power and off-grid power to charge the vehicle, and a charging management device which manages the charging devices. The charging management device includes a charging device control section which controls the charging devices within regions so that power to be provided to charge the vehicle from grid power and off-grid power is changed according to the relative magnitude of a proportion of demand to an amount of grid power supplied in the regions of a predetermined range.

When the proportion of the demand to the amount of grid power supplied is relatively small in the region, the charging device control section may control the charging device within the region to preferentially provide grid power rather than off-grid power to charge the vehicle.

When the proportion of the demand to the amount of grid power supplied is relatively large in the region, the charging device control section may control the charging device within the region to preferentially provide off-grid power rather than grid power to charge the vehicle.

When the proportion of the demand to the amount of grid power supplied is relatively large in the region, the charging device control section may control the charging device so that no grid power or off-grid power is provided if there is a charging device which is not able to provide off-grid power to charge the vehicle among the charging devices within the region.

The charging system may further include an exchange value adjustment section which adjusts an exchange value of power provided by the charging device within the region according to the relative magnitude of the proportion of the demand to the amount of grid power supplied in the region.

When the proportion of the demand to the amount of grid power supplied is relatively small in the region, the exchange value adjustment section may adjust the exchange value of power provided by the charging device within the region to be decreased.

When the proportion of the demand to the amount of grid power supplied is relatively large in the region, the exchange value adjustment section may adjust the exchange value of power provided by the charging device within the region to be increased.

When the proportion of the demand to the amount of grid power supplied is relatively large in the region, the exchange value adjustment section may adjust the exchange value of power provided by the charging device to be further increased if there is a charging device which is not able to provide off-grid power to charge the vehicle among the charging devices within the regions and the charging device control section does not perform control to pause the charging function of the charging device.

The charging management device may further include an exchange value data transmission section which transmits data indicating the exchange value of power adjusted by the exchange value adjustment section to a user device used by a user of the vehicle.

According to a second aspect of the present invention, a charging management device manages one or more charging devices, each of which has a charging function of providing at least grid power among grid power supplied from a public power grid and off-grid power supplied from a non-public power supply to charge the vehicle. The charging management device include a charging device control section which controls the charging devices within regions so that power to be provided to charge the vehicle from grid power and off-grid power is changed according to the relative magnitude of a proportion of demand to an amount of grid power supplied in the regions of a predetermined range.

According to a third aspect of the present invention, a control method of controlling a charging management device which manages one or more charging devices, each of which has a charging function of providing at least grid power among grid power supplied from a public power grid and off-grid power supplied from a non-public power supply to charge the vehicle includes a charging device control step. In the charging device control step, the charging device within a region is controlled so that power to be provided to charge the vehicle from grid power and off-grid power is changed according to the relative magnitude of a proportion of demand to an amount of grid power supplied in the regions of a predetermined range.

According to a fourth aspect of the present invention, a program for use in a charging management device manages one or more charging devices, each of which has a charging function of providing at least grid power among grid power supplied from a public power grid and off-grid power supplied from a non-public power supply to charge the vehicle. The program causes the charging management device to function as a charging device control section which controls the charging devices within regions so that power to be provided to charge the vehicle from grid power and off-grid power is changed according to the relative magnitude of a proportion of demand to an amount of grid power supplied in the regions of a predetermined range.

In addition, the aspects of the above-described invention do not describe all of the necessary features of the present invention. A sub-combination of the features is also included in the scope of the present invention.

### [Effects of the Invention]

As is apparent from the above description, according to the above-described charging system, charging management device, control method, and program, it is possible to select either of grid power and off-grid power and provide the selected power to charge a vehicle according to the relative magnitude of a proportion of demand to an amount of grid power supplied of the overall region in which a charging device is provided.

### [Brief Description of Drawings]

Fig. 1 is a diagram illustrating an example of a usage environment of a charging system 100 according to an embodiment.
Fig. 2 is a diagram illustrating an example of a configuration of a charging stand 200Aa.
Fig. 3 is a diagram illustrating another example of a configuration of a charging stand 200.
Fig. 4 is a diagram illustrating still another example of the charging stand 200.
Fig. 5 is a diagram illustrating still another example of the charging stand 200.
Fig. 6 is a diagram illustrating an example of a block configuration of a charging management device 110.
Fig. 7 is a diagram illustrating an example of information stored in an exchange value information storage section 116 in the form of a table.
Fig. 8 is a diagram illustrating an example of information stored in a user information storage section 117 in the form of a table.
Fig. 9 is a diagram illustrating an example of an operation flow of the charging management device 110.
Fig. 10 is a diagram illustrating another example of the operation flow of the charging management device 110.
Fig. 11 is a diagram illustrating an example of a hardware configuration when the charging management device 110 is composed of an electronic information processing device such as a computer.

### [Description of Embodiments]

Hereinafter, an embodiment of the invention will be described. The embodiment does not limit the invention according to the claims, and all combinations of features described in the embodiment are not necessarily essential to the solutions proposed in the invention.

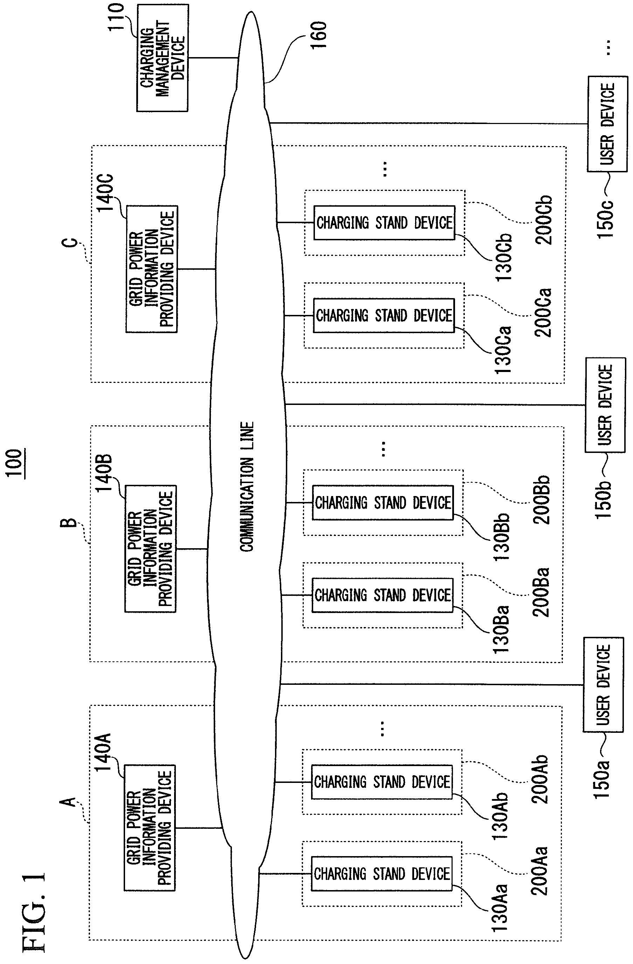

Fig. 1 is a diagram illustrating an example of a usage environment of a charging system 100 according to the embodiment. The charging system 100 is a system which provides grid power supplied from a power grid and off-grid power supplied from a solar panel or a secondary battery to charge an electric vehicle. Here, the power grid is a system in which power generation, power conversion, power transmission, and power distribution are integrated to supply a power reception facility of a consumer with power. In addition, the electric vehicle is a vehicle which runs using electricity as an energy source and using a motor as a motive power source. In addition, the solar panel and the secondary battery may be examples of a "non-public power supply" in this embodiment. In addition, the electric vehicle may be an example of the "vehicle" in this embodiment.

The charging system 100 includes a charging management device 110, a plurality of charging stand devices 130Aa, 130Ab, ..., (hereinafter collectively referred to as a charging stand device 130A), a plurality of charging stand devices 130Ba, 130Bb, ..., (hereinafter collectively referred to as a charging stand device 130B), a plurality of charging stand devices 130Ca, 130Cb, ..., (hereinafter collectively referred to as a charging stand device 130C), a plurality of grid power information providing devices 140A to 140C (hereinafter collectively referred to as a grid power information providing device 140), a plurality of user devices 150a, 150b, 150c, ... (hereinafter collectively referred to as a user device 150), and a communication line 160. Here, the communication line 160 includes a computer network such as the Internet, a core network of a communication provider, and various local networks. The charging management device 110 is connected for communication with the charging stand devices 130A, 130B, and 130C (hereinafter collectively referred to as a charging stand device 130), the grid power information providing device 140, and the user device 150 via the communication line 160.

A plurality of charging stands 200Aa, 200Ab, ... (hereinafter collectively referred to as a charging stand A) are provided within a municipality A. Likewise, a plurality of charging stands 200Ba, 200Bb, ... (hereinafter collectively referred to as a charging stand B) are provided within a municipality B. Likewise, a plurality of charging stands 200Ca, 200Cb, ... (hereinafter collectively referred to as a charging stand C) are provided within a municipality C. Here, the charging stands 200A, 200B, and 200C (hereinafter collectively referred to as a charging stand 200) are charging facilities in which the charging devices are provided. In addition, the municipalities A, B, and C (hereinafter collectively referred to as a municipality) may be examples of a "region of a predetermined range" in this embodiment.

The charging management device 110 is a device which manages the charging device provided in the charging stand 200. The charging stand device 130 is a device which controls various devices provided in the charging stand 200. For example, the charging stand device 130Aa controls various devices provided in the charging stand 200Aa. The grid power information providing device 140 is a device which provides information about a usage rate of grid power in the municipality. For example, the grid power information providing device 140A provides information about a usage rate of grid power in the municipality A. The user device 150 is a device to be used by the user of the electric vehicle. Here, the user device 150 includes a portable information terminal such as a portable telephone or PDA (personal digital assistants), a personal computer, and an ITS (intelligent transport systems) onboard device of the electric vehicle. In addition, the usage rate of grid power may be an example of a "relative magnitude of a proportion of demand to an amount of grid power supplied" in this embodiment.

In addition, for the purpose of preventing the description from being complex in this embodiment, a configuration in which the charging system 100 includes one charging management device 110 will be described. However, the charging system 100 may include a plurality of charging management devices 110.

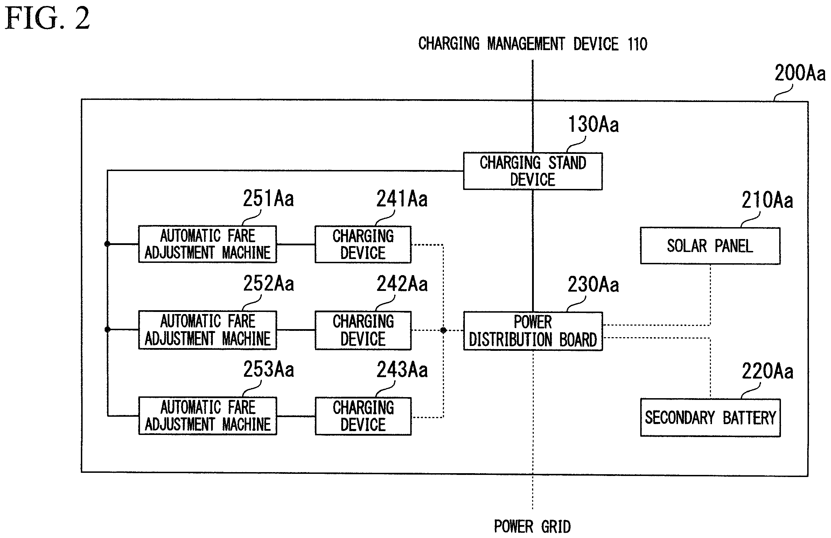

Fig. 2 is a diagram illustrating an example of a configuration of the charging stand 200Aa. In the charging stand 200Aa of this embodiment, the charging stand device 130Aa, a solar panel 210Aa, a secondary battery 220Aa, a power distribution board 230Aa, a plurality of charging devices 241Aa to 243Aa, and a plurality of automatic fare adjustment machines 251Aa to 253Aa are provided. The charging stand device 130Aa is connected for communication with each of the power distribution board 230Aa and the respective automatic fare adjustment machines 251Aa to 253Aa.

In addition, the charging device 241Aa is connected for communication with the automatic fare adjustment machines 251Aa. Likewise, the charging device 242Aa is connected for communication with the automatic fare adjustment machines 252Aa. Likewise, the charging device 243Aa is connected for communication with the automatic fare adjustment machines 253Aa. In addition, the power distribution board 230Aa is connected to each of the solar panel 210Aa, the secondary battery 220Aa, the respective charging devices 241Aa to 243Aa, and a power grid via an electric wire. Hereinafter, the functions and operations of the respective components will be described here.

In addition, the charging stands 200Ab, 200Ba, 200Bb, 200Ca, and 200Cb other than the charging stand 200Aa may have the same components as the charging stand 200Aa. In the following description, when a component provided in the charging stand 200 is distinguished, it is possible to distinguish the component provided in the charging stand 200 by attaching the same suffix (Aa, Ab, Ba, Bb, Ca, or Cb) as in the charging stand 200 having the component to the reference sign of the component. For example, the solar panels 210Aa, 210Ab, and 210Ba are indicated as being components of the charging stands 200Aa, 210Ab, and 200Ba.

In addition, in the following description, a function and operation of a component to which no suffix is attached represent a function and operation of any component to which the same reference sign is attached. For example, the functions and operations described with regard to the solar panel 210 represent the functions and operations of the solar panels 210Aa, 210Ab, 210Ba, 210Bb, 210Ca, and 210Cb.

The solar panel 210 is configured by arranging and interconnecting several solar cells in parallel in a panel shape. The secondary battery 220 can be used as a battery in which electricity is accumulated by performing charging and is iteratively available. The power distribution board 230 connected to a power supply and a load is a facility used to open and close an electric circuit or to switch an electric grid. Various switches, an electric meter, a display lamp, etc. are attached to the power distribution board 230. The charging devices 241 to 243 are ground installation charging devices for use in charging of an electric vehicle. The automatic fare adjustment machines 251 to 253 are machines installed to collect charging fees.

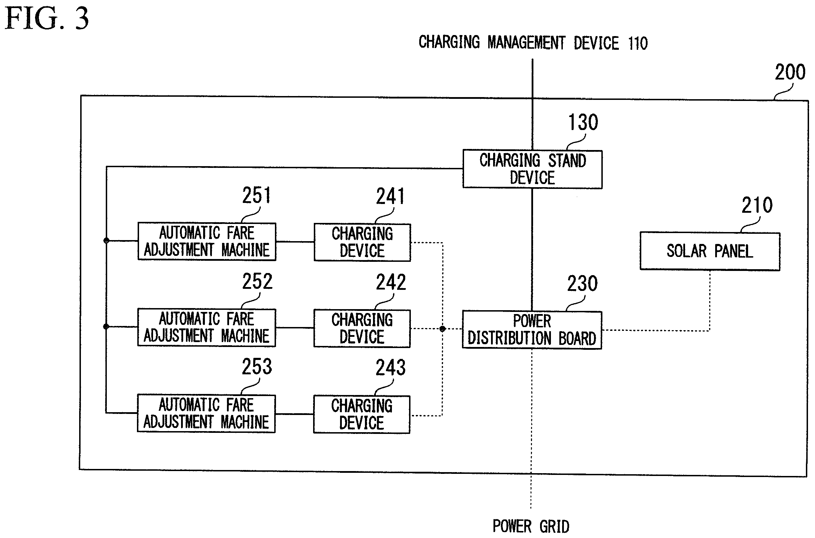

Fig. 3 is a diagram illustrating another example of a configuration of the charging stand 200. The charging stand device 130, the solar panel 210, the power distribution board 230, the plurality of charging devices 241 to 243, and the plurality of automatic fare adjustment machines 251 to 253 are provided in the charging stand 200 of this embodiment. The charging stand device 130 is connected for communication with the power distribution board 230 and the respective automatic fare adjustment machines 251 to 253. In addition, the charging device 241 is connected for communication with the automatic fare adjustment machine 251. Likewise, the charging device 242Aa is connected for communication with the automatic fare adjustment machine 252Aa. Likewise, the charging device 243 is connected for communication with the automatic fare adjustment machine 253. In addition, the power distribution board 230 is connected to each of the solar panel 210, the respective charging devices 241 to 243, and the power grid via an electric wire. Because the functions and operations of such components are the same as the functions and the operations of corresponding components in the charging stand 200 in the embodiment illustrated in Fig. 2, a description thereof is omitted here.

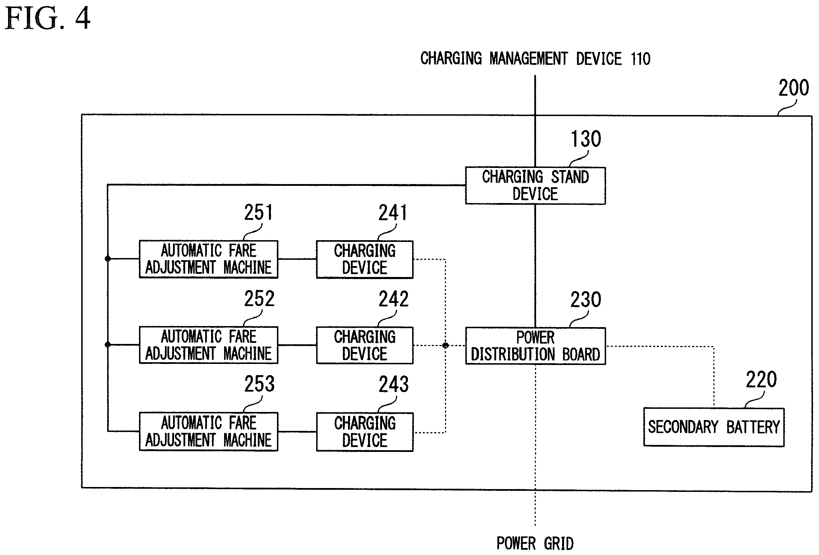

Fig. 4 is a diagram illustrating still another example of a configuration of the charging stand 200. In the charging stand 200 of this embodiment, the charging stand device 130, the secondary battery 220, the power distribution board 230, the plurality of charging devices 241 to 243, and the plurality of automatic fare adjustment machines 251 to 253 are provided. The charging stand device 130 is connected for communication with each of the power distribution board 230 and the respective automatic fare adjustment machines 251 to 253. In addition, the charging device 241 is connected for communication with the automatic fare adjustment machine 251. Likewise, the charging device 242Aa is connected for communication with the automatic fare adjustment machine 252Aa. Likewise, the charging device 243 is connected for communication with the automatic fare adjustment machine 253. In addition, the power distribution board 230 is connected to each of the secondary battery 220, the respective charging devices 241 to 243, and the power grid via an electric wire.

Because the functions and operations of such components are the same as the functions and the operations of corresponding components in the charging stand 200 in the embodiment illustrated in Fig. 2, a description thereof is omitted here.

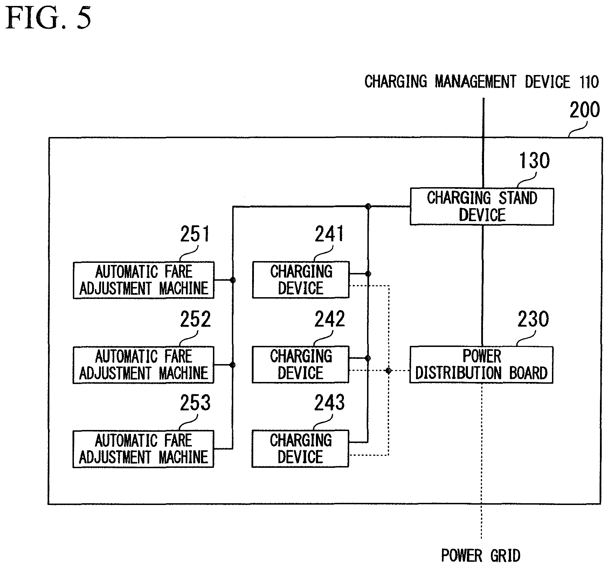

Fig. 5 is a diagram illustrating still another example of a configuration of the charging stand 200. In the charging stand 200 of this embodiment, the charging stand device 130, the power distribution board 230, the plurality of charging devices 241 to 243, and the plurality of automatic fare adjustment machines 251 to 253 are provided. The charging stand device 130 is connected for communication with each of the power distribution board 230, the respective charging devices 241 to 243, and the respective automatic fare adjustment machines 251 to 253. The power distribution board 230 is connected to each of the respective charging devices 241 to 243 and the power grid via an electric wire. Because the functions and operations of such components are the same as the functions and the operations of corresponding components in the charging stand 200 in the embodiment illustrated in Fig. 2, a description thereof is omitted here.

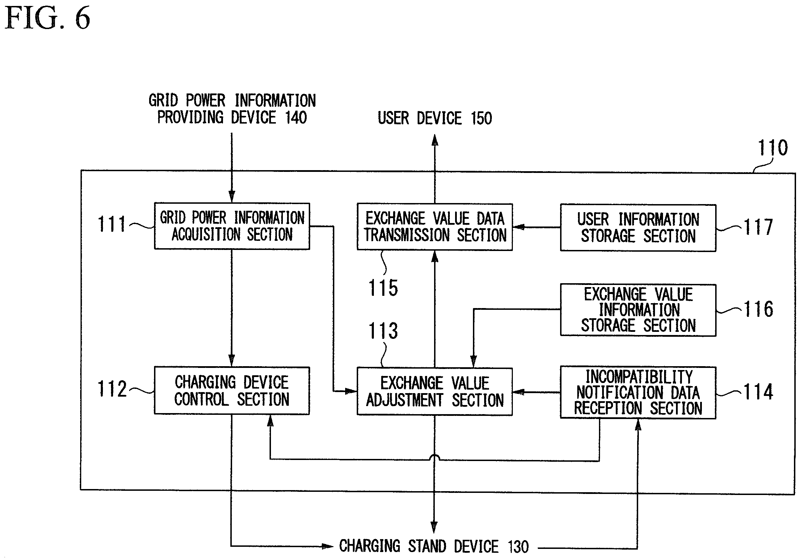

Fig. 6 is a diagram illustrating an example of a block configuration of the charging management device 110. The charging management device 110 includes a grid power information acquisition section 111, a charging device control section 112, an exchange value adjustment section 113, an incompatibility notification data reception section 114, an exchange value data transmission section 115, an exchange value information storage section 116, and a user information storage section 117. Hereinafter, the functions and operations of the respective components will be described here.

The grid power information acquisition section 111 acquires information about a usage rate of grid power in the municipality published by each grid power information providing device 140.

According to the usage rate of grid power in the municipality, the charging device control section 112 controls the charging devices 241 to 243 provided in the charging stand 200 within the municipality so that power to be provided to charge the electric vehicle is changed over between grid power and off-grid power. More specifically, when the usage rate of grid power in the municipality is low, the charging device control section 112 controls the charging devices 241 to 243 provided in the charging stand 200 within the municipality so that grid power rather than off-grid power is preferentially provided to charge the electric vehicle. In addition, when the usage rate of grid power in the municipality is high, the charging device control section 112 controls the charging devices 241 to 243 provided in the charging stand 200 within the municipality so that off-grid power rather than grid power is preferentially provided to charge the electric vehicle. In addition, when the usage rate of grid power in the municipality is high, the charging device control section 112 controls the charging devices 241 to 243 so that power of either of grid power and off-grid power is not provided if there is one of the charging devices 241 to 243 which is not able to provide off-grid power to charge an electric vehicle among the charging devices 241 to 243 provided in the charging stand 200 within the municipality. In addition, the case in which the usage rate of grid power is low may be an example in which "a proportion of demand to an amount of grid power supplied is relatively small" in this embodiment. In addition, the case in which the usage rate of grid power is high may be an example in which "the proportion of the demand to the amount of grid power supplied is relatively large" in this embodiment.

According to the usage rate of grid power in the municipality, the exchange value adjustment section 113 adjusts a unit price of a charging fee of power provided by the charging devices 241 to 243 provided in the charging stand 200 within the municipality or a point assignment amount of a point service. More specifically, when the usage rate of grid power in the municipality is low, the exchange value adjustment section 113 makes an adjustment to decrease the unit price of the charging fee of power provided by the charging devices 241 to 243 provided in the charging stand 200 within the municipality or increase the point assignment amount of the point service. In addition, when the usage rate of grid power in the municipality is high, the exchange value adjustment section 113 makes an adjustment to increase the usage fee of power provided by the charging devices 241 to 243 provided in the charging stand 200 within the municipality or decrease the point assignment amount of the point service. In addition, when the usage rate of grid power in the municipality is high, there may be one of the charging devices 241 to 243 which is not able to provide off-grid power to charge the electric vehicle among the charging devices 241 to 243 provided in the charging stand 200 within the municipality and the charging device control section 112 may not perform pausing of the charging functions of the charging devices 241 to 243. In this case, the exchange value adjustment section 113 performs adjustment to further increase the unit price of the charging fee of the power provided by the charging devices 241 to 243 or further decrease the point assignment amount of the point service. In addition, the unit price of the charging fee of power or the point assignment amount of the point service may be an example of a "power exchange value" in this embodiment. In addition, the case in which the unit price of the charging fee of power is decreased or the point assignment amount of the point service is increased may be an example in which the "power exchange value is decreased" in this embodiment. In addition, the case in which the unit price of the charging fee of power is increased or the point assignment amount of the point service is decreased may be an example in which the "power exchange value is increased" in this embodiment. In addition, the case in which the unit price of the charging fee of power is further increased or the point assignment amount of the point service is further decreased may be an example in which the "power exchange value is further increased" in this embodiment.

The incompatibility notification data reception section 114 receives notification data indicating that it is difficult to change the power to be provided to charge the electric vehicle according to control by the charging management device 110 from each charging stand device 130.

The exchange value data transmission section 115 transmits a usage fee of power adjusted by the exchange value adjustment section 113 or data indicating the point assignment amount of the point service to the user device 150.

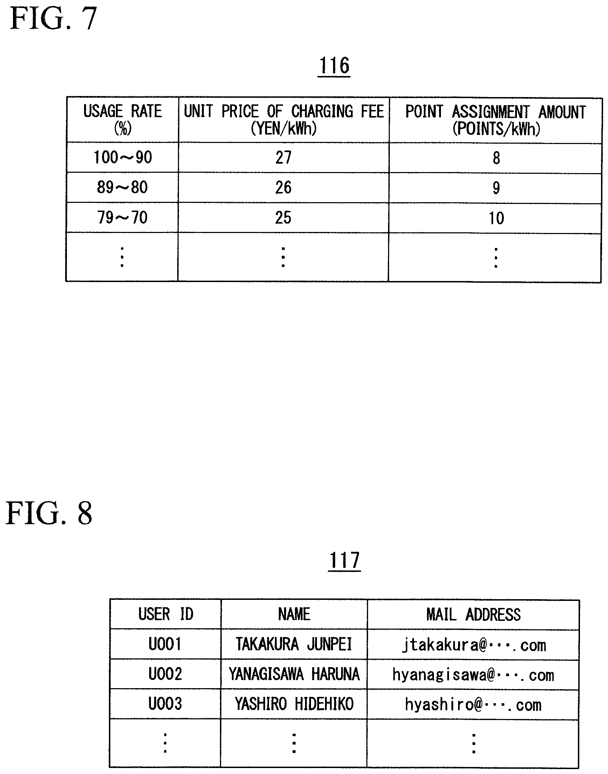

Fig. 7 is a diagram illustrating an example of information stored in the exchange value information storage section 116 in the form of a table. In the exchange value information storage section 116, information about a usage rate (%), a unit price of a charging fee (yen/kWh) and a point assignment amount (points/kWh) are associated and stored.

The usage rate (%) is a value of the usage rate of grid power in the municipality. The unit price of the charging fee (yen/kWh) is a fee per kWh of power provided by the charging devices 241 to 243 provided in the charging stand 200 within the municipality when the value of the usage rate of grid power in the municipality is a corresponding usage rate (%). In the case of a usage rate (%) corresponding to the value of the usage rate of grid power in the municipality, the point assignment amount (points/kWh) is a point assignment amount of the point service per kWh of power provided by the charging devices 241 to 243 provided in the charging stand 200 within the municipality.

Fig. 8 is a diagram illustrating an example of information stored in the user information storage section 117 in the form of a table.

In the user information storage section 117, information about a user ID (identifier), a name, and a mail address is associated and stored.

The user ID is an identification code for uniquely identifying each user among users of the charging service 100. The name is a full name of the user identified according to the user ID. The mail address is an address used to transmit electronic mail to the user identified according to the user ID.

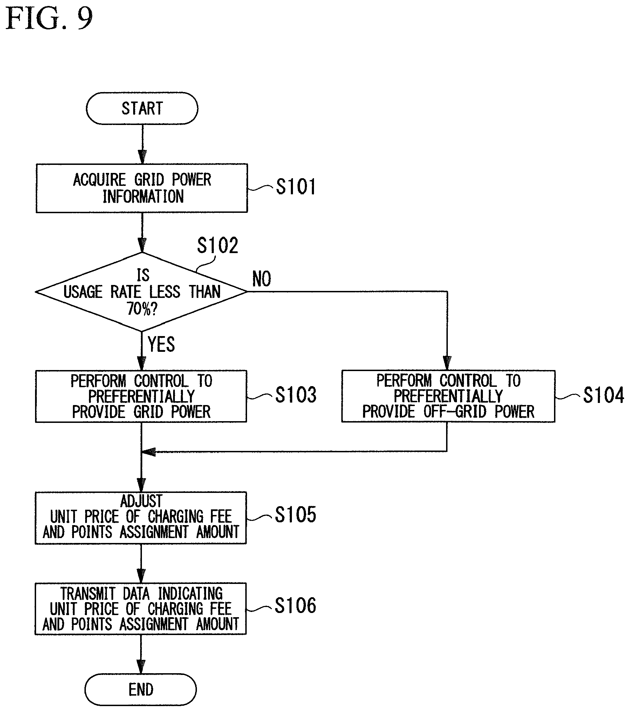

Fig. 9 is a diagram illustrating an example of an operation flow of the charging management device 110. This operation flow represents an operation of the charging management device 110 when data has been received from the grid power information providing device 140. In addition, Figs. 1 to 8 will be referred to together in the description of the operation flow.

The grid power information providing device 140A monitors a usage rate of grid power in the municipality A. Then, the grid power information providing device 140A publishes information about the usage rate. Likewise, the grid power information providing device 140B publishes information about the usage rate of grid power in the municipality B. Likewise, the grid power information providing device 140C publishes information about the usage rate of grid power in the municipality C.

The grid power information acquisition section 111 of the charging management device 110 acquires the information about the usage rate published by each grid power information providing device 140, for example, at hourly intervals (S101). Then, the charging management device 110 transmits the acquired data representing usage rates of grid powers in the municipalities A to C to the charging device control section 112 and the exchange value adjustment section 113.

The charging device control section 112 of the charging management device 110 receives the data representing the usage rates of grid powers in the respective municipalities A to C from the grid power information acquisition section 111. Then, when there is a municipality in which the usage rate of grid power represented by the data, for example, is less than 70% (S102: Yes), the charging device control section 112 transmits control data to issue a command to preferentially provide grid power rather than off-grid power to charge the electric vehicle to each charging stand device 130 provided in each charging stand 200 within the municipality (S103). The charging stand device 130 receiving the control data performs switching control on an electric grid of the power distribution board 230 so that grid power supplied from the power grid is supplied to the charging devices 241 to 243. In addition, when the secondary battery 220 is provided in the charging stand 200 as illustrated in Figs. 2 and 4, the charging stand device 130 also performs switching control on the electric grid of the power distribution board 230 so that the secondary battery 220 is charged with grid power with respect to the secondary battery 220 which is not fully charged. Thereby, the charging devices 241 to 243 provide grid power to charge the electric vehicle. In addition, the secondary battery 220 is charged with grid power.

On the other hand, when there is a municipality in which the usage rate of grid power represented by the data received from the grid power information acquisition section 111, for example, is greater than or equal to 70% (5102: No), the charging device control section 112 transmits control data to issue a command to preferentially provide off-grid power rather than grid power to charge the electric vehicle to each charging stand device 130 provided in each charging stand 200 within the municipality (S104). When the solar panel 210 is provided in the charging stand 200 as illustrated in Fig. 3, the charging stand device 130 receiving the control data performs switching control on the electric grid of the power distribution board 230 so that off-grid power supplied from the solar panel 210 is supplied to the charging devices 241 to 243. In addition, when the secondary battery 220 is provided in the charging stand 200 as illustrated in Fig. 4, the charging stand device 130 performs switching control on the electric grid of the power distribution board 230 so that off-grid power supplied from the secondary battery 220 is supplied to the charging devices 241 to 243. In addition, if off-grid power is supplied from the solar panel 210 when the solar panel 210 and the secondary battery 220 are provided in the charging stand 200 as illustrated in Fig. 2, the charging stand device 130 performs switching control on the electric grid of the power distribution board 230 so that off-grid power supplied from the solar panel 210 is supplied to the charging devices 241 to 243. In this case, when the secondary battery 220 is not fully charged, the charging stand device 130 also performs switching control on the electric grid of the power distribution board 230 so that the secondary battery 220 is charged with off-grid power supplied from the solar panel 210. In addition, when off-grid power is not supplied from the solar panel 210 or when the secondary battery 220 is fully charged, the charging stand device 130 performs switching control on the electric grid of the power distribution board 230 so that off-grid power supplied from the secondary battery 220 is supplied to the charging devices 241 to 243. Thereby, the charging devices 241 to 243 provide off-grid power to charge the electric vehicle.

In addition, the secondary battery 220 is charged with off-grid power supplied from the solar panel 210.

On the other hand, upon receiving data representing usage rates of grid power in the respective municipalities A to C from the grid power information acquisition section 111, the exchange value adjustment section 113 of the charging management device 110 reads information about a unit price of a charging fee (yen/kWh) and a point assignment amount (points/kWh) stored in association with information about a usage rate (%) corresponding to the usage rate of grid power in the municipality A represented by the data received from the grid power information acquisition section 111 among information stored in the exchange value information storage section 115. Then, the exchange value adjustment section 113 transmits adjustment data to perform adjustment so that the unit price of the charging fee (yen/kWh) and the point assignment amount (points/kWh) are set as a new unit price of the charging fee and a new point assignment amount to the charging stand device 130A provided in each charging stand 200 within the municipality A (S105). Likewise, the exchange value adjustment section 113 reads information about a unit price of a charging fee (yen/kWh) and a point assignment amount (points/kWh) stored in association with information about a usage rate (%) corresponding to the usage rate of grid power in the municipality B represented by the data received from the grid power information acquisition section 111 among the information stored in the exchange value information storage section 115. Then, the exchange value adjustment section 113 transmits adjustment data to perform adjustment so that the unit price of the charging fee (yen/kWh) and the point assignment amount (points/kWh) are set as a new unit price of the charging fee and a new point assignment amount to the charging stand device 130B provided in each charging stand 200 within the municipality B. Likewise, the exchange value adjustment section 113 reads information about a unit price of a charging fee (yen/kWh) and a point assignment amount (points/kWh) stored in association with information about a usage rate (%) corresponding to the usage rate of grid power in the municipality C represented by the data received from the grid power information acquisition section 111 among the information stored in the exchange value information storage section 115. Then, the exchange value adjustment section 113 transmits adjustment data to perform adjustment so that the unit price of the charging fee (yen/kWh) and the point assignment amount (points/kWh) are set as a new unit price of the charging fee and a new point assignment amount to the charging stand device 130C provided in each charging stand 200 within the municipality C. In addition, the exchange value adjustment section 113 transmits data indicating the new unit price of the charging fee and the new point assignment amount to the exchange value data transmission section 115. The charging stand device 130 receiving the adjustment data sets the new unit price of the charge fee and the new point assignment amount represented by the data in the automatic fare adjustment machines 251 to 253. Thereby, the automatic fare adjustment machine 251 performs settlement on the charging fee or assigns points of the point service by means of the new unit price of the charging fee and the new point assignment amount.

Upon receiving data representing information about new unit prices of the charging fee and new point assignment amounts in the respective charging stands 200 within the municipalities A to C from the exchange value adjustment section 113, the exchange value data transmission section 115 of the charging management device 110 transmits the information represented by the data in electronic mail addressed to a mail address of the user stored in the user information storage section 117 (S106). Thereby, the user of the electric vehicle can know the information about the new unit prices of the charging fee and the new point assignment amounts in the respective charging stands 200 within the municipalities A to C by receiving and viewing the electronic mail transmitted from the charging management device 110 using the user terminal 150.

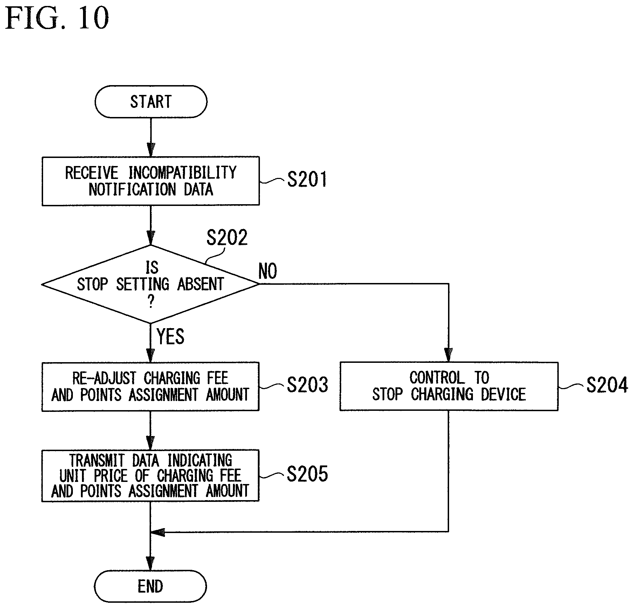

Fig. 10 is a diagram illustrating another example of the operation flow of the charging management device 110. This operation flow represents an operation of the charging management device 110 when data has been received from the charging stand device 130. In addition, Figs. 1 to 9 will be referred to together in the description of the operation flow.

The charging stand 200 has any form among the embodiments illustrated in Figs. 2 to 5. Then, as described in relation to the process of step S104 of the operation flow of Fig. 9, when there is a municipality in which the usage rate of grid power indicated by the data received from the grid power information acquisition section 111, for example, is greater than or equal to 70%, the charging device control section 112 transmits control data to issue a command to preferentially provide off-grid power rather than grid power to charge the electric vehicle to the charging stand device 130 provided in each charging stand 200 within the municipality. Then, the charging stand device 130 performs switching control on the electric grid of the power distribution board 240 so that off-grid power is supplied to the charging devices 241 to 243 according to the control data. However, when neither the solar panel 210 nor the secondary battery 220 is provided in the charging stand 200 as illustrated in Fig. 5, it is difficult for the charging stand 200 to supply off-grid power to the charging devices 241 to 243. In addition, even when the solar panel 210 or the secondary battery 220 is provided in the charging stand 200 as illustrated in Figs. 2 to 4, it is still difficult for the charging stand 200 to supply off-grid power to the charging devices 241 to 243 if the solar panel 210 is in a state in which power generation is difficult and the secondary battery 220 is not charged. In these cases, the charging stand device 130 provided in the charging stand 200 transmits notification data indicating that a control for which a command has been issued is difficult to be performed to the charging management device 110. Then, the charging stand device 130 performs switching control on the electric grid of the power distribution board 240 so that grid power supplied from the power grid is supplied to the charging devices 241 to 243 until new control data is received.

The incompatibility notification data reception section 114 of the charging management device 110 receives notification data transmitted from the charging stand device 130 as described above (S201). Then, when there is a charging stand 200 incompatible with the control for which the command has been issued, the incompatibility notification data reception section 114 transmits data to identify the charging stand device 130 of a transmission source of the notification data to the charging device control section 112 when a setting to stop the charging devices 241 to 243 in the charging stand 200 is made (S202: No).

Upon receiving the data for identifying the charging stand device 130 from the incompatibility notification data reception section 114, the charging device control section 112 transmits control data for which a command is issued so that either grid power or off-grid power is not supplied to the charging stand device 130 identified by the data received from the incompatibility notification data reception section 114 (S204). The charging stand device 130 receiving the control data performs switching control on the electric grid of the power distribution board 230 so that no power is supplied to the charging devices 241 to 243. Thereby, the charging stand 200 incompatible with control by the charging management device 110 stops the charging function.

On the other hand, where there is a charging stand 200 incompatible with control for which a command has been issued, the incompatibility notification data reception section 114 transmits data for identifying the charging stand device 130 of a transmission source of notification data to the exchange value adjustment section 113 when there is no setting indicating the process of stopping the charging devices 241 to 243 in the charging stand 200 (S202: Yes).

Upon receiving the data for identifying the charging stand device 130 from the incompatibility notification data reception section 114, the exchange value adjustment section 113 reads information about a unit price of a charging fee (yen/kWh) higher than a current unit price of a charging fee and a point assignment amount (points/kWh) lower than a current point assignment amount set in the charging stand device 130 identified by the data received from the incompatibility notification data reception section 114 among the information stored in the exchange value information storage section 116. Then, the exchange value adjustment section 113 transmits adjustment data to perform adjustment so that the unit price of the charging fee (yen/kWh) and the point assignment amount (points/kWh) are set as a new unit price of the charging fee and a new point assignment amount to the charging stand device 130 (S203). In addition, the exchange value adjustment section 113 transmits data indicating the new unit price of the charging fee and the new point assignment amount to the exchange value data transmission section 115. The charging stand device 130 receiving the adjustment data sets the new unit price of the charge fee and the new point assignment amount indicated by the data in the automatic fare adjustment machines 251 to 253. Thereby, the charging stand 200 incompatible with control by the charging management device 110 further increases the charging fee or decreases the number of points of the point service instead of providing grid power to charge the electric vehicle.

Upon receiving data representing information about the new unit price of the charging fee and the new point assignment amount from the exchange value adjustment section 113, the exchange value data transmission section 115 transmits the information represented by the data in electronic mail addressed to a mail address of the user stored in the user information storage section 117 (S205). Thereby, the user of the electric vehicle can recognize a changed unit price of the charging fee and a changed point assignment amount in real time even when the unit price of the charging fee and the point assignment amount are changed by receiving and viewing the electronic mail transmitted from the charging management device 110 using the user terminal 150.

As described above, according to a usage rate of grid power of the overall municipality in which the charging devices 241 to 243 are provided, the charging system 100 can select either of grid power and off-grid power and provide the selected power to charge the electric vehicle.

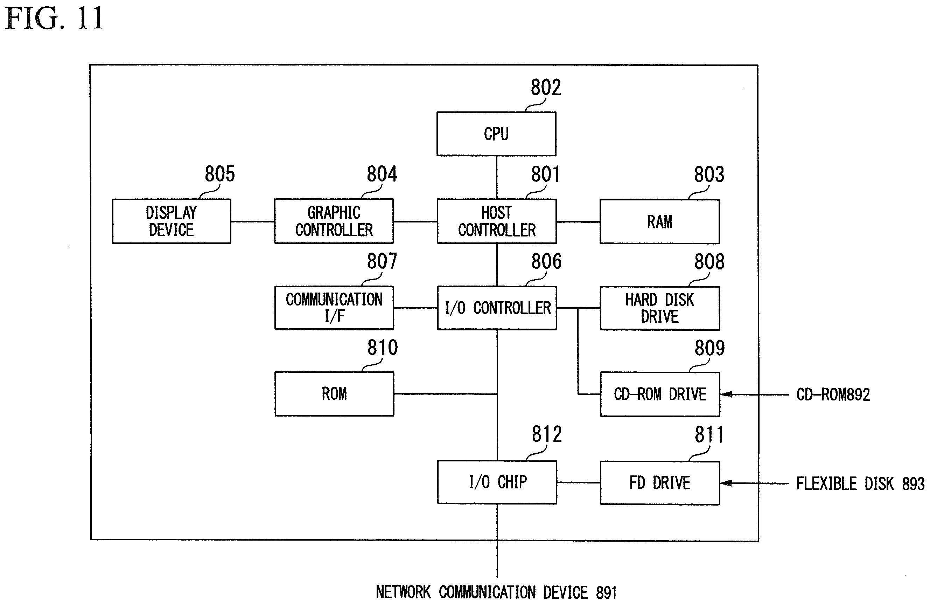

Fig. 11 is a diagram illustrating an example of a hardware configuration when the charging management device 110 is composed of an electronic information processing device such as a computer. The charging management device 110 includes a CPU (central processing unit) peripheral section, an I/O (input/output) section, and a legacy I/O (input/output) section. The CPU peripheral section includes a CPU 802, a RAM (random access memory) 803, a graphic controller 804, and a display device 805 interconnected by a host controller 801. The I/O section includes a communication I/F (interface) 807, a hard disk drive 808, and a CD-ROM (compact disk read only memory) drive 809 connected by an I/O (input/output) controller 806 to the host controller 801. The legacy I/O section includes a ROM (read only memory) 810, a flexible disk drive 811, and an I/O (input/output) chip 812 connected to the I/O controller 806.

The host controller 801 connects the RAM 803, the CPU 802, which accesses the RAM 803 at a high transmission rate, and the graphic controller 804. The CPU 802 operates based on programs stored in the ROM 810 and the RAM 803 and controls the respective sections. The graphic controller 804 acquires image data generated by the CPU 802 or the like on a frame buffer provided in the RAM 803 and displays the image data on the display device 805. Alternatively, the graphic controller 804 may internally include a frame buffer to store the image data generated by the CPU 802 or the like.

The I/O controller 806 connects the host controller 801 to the hard disk drive 808, the communication I/F 807, and the CD-ROM drive 809 which are relatively high-speed I/O (input/output) devices. The hard disk drive 808 stores programs and data used by the CPU 802. The communication I/F 807 is connected to a network communication device 891 to transmit and receive programs or data. The CD-ROM drive 809 reads programs or data from the CD-ROM 892 and provides the read programs or data to the hard disk drive 808 and the communication I/F 807 via the RAM 803.

The I/O controller 806 is connected to the ROM 810, the flexible disk drive 811, and a relatively low-speed I/O (input/output) device of the I/O chip 812. The ROM 810 stores a boot program to be executed when the charging management device 110 starts up, programs dependent on the hardware of the charging management device 110, or the like. The flexible disk drive 811 reads programs or data from a flexible disk 893 and provides the programs or data to the hard disk drive 808 and the communication I/F 807 via the RAM 803. The I/O chip 812 connects the flexible disk drive 811 or various I/O (input/output) devices via a parallel port, a serial port, a keyboard port, a mouse port, and so on.

The programs to be executed by the CPU 802 are stored in the flexible disk 893, the CD-ROM 892 or a recording medium such as an IC (integrated circuit) card and provided to users. The programs stored in the recording medium may or may not be compressed. The programs are installed from the recording medium onto the hard disk drive 808, read to the RAM 803, and executed by the CPU 802. The programs executed by the CPU 802 cause the charging management device 110 to function as the grid power information acquisition section 111, the charging device control section 112, the exchange value adjustment section 113, the incompatibility notification data reception section 114, the exchange value data transmission section 115, the exchange value information storage section 116, and the user information storage section 117 described in relation to Figs. 1 to 10.

The programs described above may be stored in an external storage medium. As the storage medium, in addition to the flexible disk 893 and the CD-ROM 892, an optical recording medium such as a DVD (digital versatile disk) or a PD (phase disk), a magneto-optical recording medium such as a MD (MiniDisk), a tape medium, a semiconductor memory such as an IC card, and so on can be used. In addition, the program may be provided as a program via a network using a storage medium such as a hard disk or a RAM provided in a server system connected to a dedicated communication network or the Internet as a recording medium.

While the embodiment of the present invention has been described, the technical scope of the invention is not limited to the above-described embodiment. It is apparent to persons skilled in the art that various alterations and improvements can be added to the above-described embodiment. It is also apparent from the scope of the claims that embodiments to which such alterations or improvements are added can be included in the technical scope of the invention.

### [Industrial Applicability]

According to the above-described charging system, charging management device, control method, and program, it is possible to select either of grid power and off-grid power and provide the selected power to charge a vehicle according to the relative magnitude of a proportion of demand to an amount of grid power supplied of the overall region in which a charging device is provided.

### [Reference Signs List]

- 100: Charging system
- 110: Charging management device
- 111: Grid power information acquisition section
- 112: Charging device control section
- 113: Exchange value adjustment section
- 114: Incompatibility notification data reception section
- 115: Exchange value data transmission section
- 116: Exchange value information storage section
- 117: User information storage section
- 130: Charging stand device
- 140: Grid power information providing device
- 150: User device
- 160: Communication line
- 200: Charging stand
- 210: Solar panel
- 220: Secondary battery
- 230: Power distribution board
- 241: Charging device
- 242: Charging device
- 243: Charging device
- 251: Automatic fare adjustment machine
- 252: Automatic fare adjustment machine
- 253: Automatic fare adjustment machine
- 801: Host controller
- 802: CPU
- 803: RAM
- 804: Graphic controller
- 805: Display device
- 806: I/O controller
- 807: Communication I/F
- 808: Hard disk drive
- 809: CD-ROM drive
- 810: ROM
- 811: Flexible disk drive
- 812: I/O chip
- 891: Network communication device
- 892: CD-ROM
- 893: Flexible disk
- A: Municipality
- B: Municipality
- C: Municipality

## Claims

1. A charging management device (110) which is configured to manage one or more charging devices (241, 242, 243) each of which has a charging function of providing at least grid power among grid power supplied from a public power grid and off-grid power supplied from a non-public power supply to charge a secondary battery of a vehicle which is not fully charged via the charging device (241, 242, 243) by controlling a power distribution board (230) which is connected to the charging devices (241, 242, 243), the grid power, and the off-grid power, and which is capable to switch electric power to be supplied to the charging device (241, 242, 243) from the grid power and the off-grid power,
the charging management device (110) comprising:
a grid power information acquisition section (111) which is configured to acquire information about usage rate of the power grid in regions of a predetermined range and update the information periodically,
a charging device control section (112) which is configured to transmit control data to a charging stand device (130) to control the charging devices (241, 242, 243) within regions so that power to be provided to charge the vehicle from grid power and off-grid power is changed according to the relative magnitude of a proportion of demand to an amount of grid power supplied in the regions received from the grid power information acquisition section (111), the relative magnitude is based on the use rate of the power grid in each of regions,
an exchange value adjustment section (113) which is configured to adjust an exchange value of power provided by the charging device (241, 242, 243) within the region according to the relative magnitude of the proportion of the demand to the amount of grid power supplied in the region received from the grid power information acquisition section (111),
a user information storage section (117) which is configured to store an ID which is an identification code for identifying the user, and
an exchange value data transmission section (115) which is configured to transmit the adjusted exchange value data received from the exchange value adjustment section (113) to a user device (150) which is used by the user identified by the ID.

2. The charging management device (110) according to claim 1,
wherein the charging device control section (112) is configured to control the charging device (241, 242, 243) through the power distribution board (230) so that power to be provided to charge the vehicle is preferentially changed to grid power when the proportion of the demand to the amount of grid power supplied is relatively small in the region.

3. The charging management device (110) according to claim 2,
wherein the exchange value adjustment section (113) is configured to set the unit price of charging fee determined at a lower price to an automatic fare adjustment machine (251, 252, 253) connected to a charging device (241, 242, 243) when the proportion of the demand to the amount of grid power supplied is relatively small in the region.

4. The charging management device (110) according to claim 3,
wherein the exchange value adjustment section (113) is configured to set a service point determined at a higher point to the automatic fare adjustment machine (251, 252, 253) when the proportion of the demand to the amount of grid power supplied is relatively small in the region.

5. The charging management device (110) according to claim 1,
wherein the charging device control section (112) is configured to control the charging device (241, 242, 243) through the power distribution board (230) so that power to be provided to charge the vehicle is preferentially changed to off-grid power when the proportion of the demand to the amount of grid power supplied is relatively large in the region.

6. The charging management device (110) according to claim 5,
wherein the charging device control section (112) is configured to control the charging device (241, 242, 243) through the power distribution board (230) so that power to be provided to charge the vehicle is changed to off-grid power supplied from a solar panel (210) and/or a secondary battery (220) when the proportion of the demand to the amount of grid power supplied is relatively large in the region.

7. The charging management device (110) according to claim 6,
wherein the charging device control section (112) is configured to control the charging device (241, 242, 243) through the power distribution board (230) so that power to be provided to charge the vehicle is preferentially changed to off-grid power supplied from the solar panel (210).

8. The charging management device (110) according to claim 7,
wherein the charging device control section (112) is configured to control the charging device (241, 242, 243) through the power distribution board (230) so that power to be provided to charge the vehicle is changed to off-grid power supplied from the secondary battery (220) in case power is not supplied from the solar panel (210).

9. The charging management device (110) according to claim 8,
wherein the charging device control section (112) is configured to control the charging device (241, 242, 243) through the power distribution board (230) so that power to be provided to charge the vehicle is changed from off-grid power to grid power in case power is not supplied from the solar panel (210) and the secondary battery (220).

10. The charging management device (110) according to claim 8,
wherein the charging device control section (112) is configured to control the charging device (241, 242, 243) so that power to be provided to charge the vehicle is not supplied in case power is not supplied from the solar panel (210) and the secondary battery (220).

11. The charging management device (110) according to any one of claims 5 to 10,
wherein the exchange value adjustment section (113) is configured to set the unit price of charging fee determined at a higher price to an automatic fare adjustment machine (251, 252, 253) connected to a charging device (241, 242, 243) when the proportion of the demand to the amount of grid power supplied is relatively large in the region.

12. The charging management device (110) according to claim 8,
wherein the exchange value adjustment section (113) is configured to set the unit price of charging fee determined at a further higher price to an automatic fare adjustment machine (251, 252, 253) connected to a charging device (241, 242, 243) in case power is not supplied from the solar panel (210) and the secondary battery (220).

13. The charging management device (110) according to claim 12,
wherein the exchange value adjustment section (113) is configured to set the service point determined at a lower point to the automatic fare adjustment machine (251, 252, 253) when the proportion of the demand to the amount of grid power supplied is relatively large in the region.

14. A method to manage one or more charging devices (241, 242, 243) each of which has a charging function of providing at least grid power among grid power supplied from a public power grid and off-grid power supplied from a non-public power supply to charge a secondary battery of a vehicle which is not fully charged via the charging device (241, 242, 243) by controlling a power distribution board (230) which is connected to the charging devices (241, 242, 243), the grid power, and the off-grid power, and which is capable to switch electric power to be supplied to the charging device (241, 242, 243) from the grid power and the off-grid power,
the method comprising:
a grid power information acquisition step of acquiring information about usage rate of the power grid in regions of a predetermined range and updating the information periodically,
a charging device control step of transmitting control data to a charging stand device (130) to control the charging devices (241, 242, 243) within regions so that power to be provided to charge the vehicle from grid power and off-grid power is changed according to the relative magnitude of a proportion of demand to an amount of grid power supplied in the regions received in the grid power information acquisition step, the relative magnitude is based on the use rate of the power grid in each of regions,
an exchange value adjustment step of adjusting an exchange value of power provided by the charging device (241, 242, 243) within the region according to the relative magnitude of the proportion of the demand to the amount of grid power supplied in the region acquired and updated in the grid power information acquisition step,
a user information storing step of storing an ID which is an identification code for identifying the user, and
an exchange value data transmission step of transmitting the adjusted exchange value data adjusted in the exchange value adjustment step to a user device (150) which is used by the user identified by the ID.

15. A program for a computer of a charging management device (110) to manage one or more charging devices (241, 242, 243) each of which has a charging function of providing at least grid power among grid power supplied from a public power grid and off-grid power supplied from a non-public power supply to charge a secondary battery of a vehicle which is not fully charged via the charging device (241, 242, 243) by controlling a power distribution board (230) which is connected to the charging devices (241, 242, 243), the grid power, and the off-grid power, and which is capable to switch electric power to be supplied to the charging device (241, 242, 243) from the grid power and the off-grid power,
the program causing the computer to execute:
a grid power information acquisition step of acquiring information about usage rate of the power grid in regions of a predetermined range and updating the information periodically,
a charging device control step of transmitting control data to a charging stand device (130) to control the charging devices (241, 242, 243) within regions so that power to be provided to charge the vehicle from grid power and off-grid power is changed according to the relative magnitude of a proportion of demand to an amount of grid power supplied in the regions received in the grid power information acquisition step, the relative magnitude is based on the use rate of the power grid in each of regions,
an exchange value adjustment step of adjusting an exchange value of power provided by the charging device (241, 242, 243) within the region according to the relative magnitude of the proportion of the demand to the amount of grid power supplied in the region acquired and updated in the grid power information acquisition step,
a user information storing step of storing an ID which is an identification code for identifying the user, and an exchange value data transmission step of transmitting the adjusted exchange value data adjusted in the exchange value adjustment step to a user device (150) which is used by the user identified by the ID.
